# EUROPÄISCHE PATENTSCHRIFT

(11) **EP 4 666 056 B1**
(45) Veröffentlichungstag und Bekanntmachung des Hinweises auf die Patenterteilung: **09.12.2026**
(21) Anmeldenummer: 24704445.6
(22) Anmeldetag: 12.02.2024
(51) Int. Cl.: G01N 21/31, G01N 21/64, G01N 21/85, G01N 21/65, G01N 21/84, G01J 3/10, G01J 3/02, G01N 21/25, G01J 3/44

(54) **VORRICHTUNG ZUR UNTERSUCHUNG VON STOFFPROBEN MITTELS ELEKTROMAGNETISCHER STRAHLUNG**
DEVICE FOR ANALYZING MATERIAL SAMPLES BY MEANS OF ELECTROMAGNETIC RADIATION
DISPOSITIF D'ANALYSE D'ÉCHANTILLONS DE MATIÈRE AU MOYEN D'UN RAYONNEMENT ÉLECTROMAGNÉTIQUE

(30) Priorität: 13.02.2023 DE 102023103406
(43) Veröffentlichungstag der Anmeldung: 24.12.2025
(73) Patentinhaber: Nova Industrial Analytics GmbH, 73569 Eschach (DE)
(72) Erfinder: MANNHARDT, Joachim, 73569 Eschach (DE)
(74) Vertreter: Raunecker, Klaus Peter
(86) Internationale Anmeldenummer: PCT/EP2024/053461
(87) Internationale Veröffentlichungsnummer: WO 2024/170489

(56) Entgegenhaltungen:
- US-A1- 2005 218 338
- US-A1- 2016 299 060

## Beschreibung

Die Erfindung betrifft eine Vorrichtung zur Untersuchung von Stoffproben mittels elektromagnetischer Strahlung mit mehreren simultan einsetzbaren Detektoren nach dem Oberbegriff des Anspruchs 1.

In vielen Bereichen der produzierenden und weiterverarbeitenden Industrie, beispielsweise der Medizintechnik, Biotechnologie, Lebensmittelindustrie etc., werden optische Messverfahren eingesetzt, um den Herstellungsprozess eines Produkts zu beobachten und um Zustand oder Qualität eines Produkts oder eines Zwischenprodukts zu bewerten. Unter dem Begriff "optisches Messverfahren" soll dabei im Folgenden ein Messverfahren unter der Verwendung elektromagnetischer Strahlung verstanden werden, insbesondere elektromagnetische Strahlung in einem Spektralbereich zwischen Infrarot und Ultraviolett. "Optische Messung" beinhaltet somit insbesondere eine Messung im infraroten (IR), im sichtbaren (VIS) sowie im ultravioletten (UV) Spektralbereich.

Oftmals besteht bei solchen Messungen der Wunsch, an der Stoffprobe Messungen in einem vorgegebenen Spektralbereich durchzuführen und gleichzeitig mit Hilfe eines bildgebenden Verfahrens ein zweidimensionales Bild der Stoffprobe aufzunehmen. Beispielsweise ist es interessant, den Kristallisationsprozess in einer Stoffprobe einerseits spektral zu erfassen, andererseits das Einsetzen einer Kristallisation oder einer chemischen Reaktion in einem zweidimensionalen Bild zu beobachten.

Aus US 2016/0299060 A1 ist eine Messeinrichtung bekannt, mit der eine Stoffprobe simultan mit Hilfe mehrerer verschiedener Messmethoden untersucht werden kann. Hierbei wird Strahlung einer Lichtquelle mit Hilfe eines Lichtwellenleiters über ein Umlenkelement in Form eines Prismas auf die zu untersuchende Stoffprobe geleitet. Von der auf diese Weise beleuchteten Stoffprobe werden mit einem bildgebenden Detektor, beispielsweise einem CCD-Sensor, zweidimensionale Bilder gemacht. Gleichzeitig wird die von der Stoffprobe reflektierte Strahlung über ein Umlenkelement in Form eines Prismas in einen weiteren Detektor, beispielsweise einem Spektrometer, geleitet. Diese Messeinrichtung gestattet somit eine bildgebende und gleichzeitig eine spektrale Analyse der Stoffprobe. Jedoch beinhaltet die Strahllenkung mit Hilfe eines Prismas eine starke Einschränkung des für die Messungen in Frage kommenden Spektralbereichs. Werkstoffe, die im Bereich der klassischen Optik typischerweise für UV/VIS-Spektroskopie für optische Komponenten verwendet werden (Saphir, BK7, Quarzglas, ), zeigen nämlich im infraroten Wellenlängenbereich > 3 µm einen starken Abfall der Transmission; somit kann die aus der US 2016/0299060 A1 bekannte Messeinrichtung zwar im sichtbaren (VIS) Spektralbereich betrieben werden, sie liefert aber im IR-Bereich keine zufriedenstellenden Ergebnisse.

Aus der US 2005/0218338A1 ist ein Vorrichtung zur Untersuchung von Stoffproben mittels elektromagnetischer Strahlung mit mehreren simultan einsetzbaren Detektoren bekannt, mit einer Strahlungsquelle zur Erzeugung elektromagnetischer Strahlung, einem Lichtleiter und einem Umlenkelement zur Lenkung der Strahlung auf die Stoffprobe, einem ersten Detektor zur Erfassung einer von der Stoffprobe ausgehenden ersten Strahlung, und mit einem zweiten Detektor zur Erfassung einer von der Stoffprobe ausgehenden zweiten Strahlung, wobei das Umlenkelement einen Ringspiegel ist.

Aufgabe der vorliegenden Erfindung ist es, die aus dem Stand der Technik bekannte Messvorrichtung in einer solchen Weise weiterzuentwickeln, dass qualitativ hochwertige Messungen in einem breiten Spektralbereich und in unterschiedlichen Beleuchtungsgeometrien möglich sind.

Diese Aufgabe wird gelöst durch eine Vorrichtung mit den Merkmalen des unabhängigen Anspruchs 1. Die Unteransprüche betreffen vorteilhafte Weiterbildungen und Varianten der Erfindung.

Eine erfindungsgemäße Vorrichtung umfasst eine Strahlungsquelle zur Erzeugung elektromagnetischer Strahlung sowie mindestens zwei Detektoren zur Erfassung einer von der Stoffprobe ausgehenden Strahlung. Die Vorrichtung umfasst weiterhin mindestens einen Lichtleiter und ein Umlenkelement, mit denen die Strahlung der Strahlungsquelle auf die Stoffprobe gelenkt werden. Als Umlenkelement wird ein Ringspiegel verwendet. Erfindungsgemäß wird ist der erste Detektor zur Durchführung einer spektralen Messung ausgestaltet, wobei die Vorrichtung mindestens einen Lichtleiter umfasst, mittels dessen die von der Stoffprobe ausgehende Strahlung auf den ersten Detektor geleitet wird, und Lichtleiter, zur Lenkung der Strahlung auf die Stoffprobe und Lichtleiter, mittels derer die von der Stoffprobe ausgehende Strahlung auf den ersten Detektor geleitet wird, derart auf einem gemeinsamen Kreissegment angeordnet sind, dass über den Ringspiegel sowohl Strahlung zur Beleuchtung der Stoffprobe auf diese gelenkt wird als auch von der Stoffprobe ausgehende Strahlung auf den ersten Detektor geleitet wird.

Unter einem Ringspiegel soll dabei ein sowohl einstückiges ringförmiges Spiegelelement als auch eine Vielzahl verspiegelter, auf einem Kreisring angeordneter Einzelelemente verstanden werden.

Der Einsatz eines Ringspiegels zur Lenkung der einfallenden Strahlung hat den Vorteil, dass die Vorrichtung für ein weiten Spektralbereich elektromagnetischer Strahlung eingesetzt werden kann. Während ein Prisma (wie es in US 2016/0299060 A1 zur Strahllenkung vorgeschlagen wird) abhängig von dem verwendeten Material nur in einem begrenzten Spektralbereich transparent für elektromagnetische Strahlung ist, kann ein Ringspiegel in einem wesentlich weiteren Spektralbereich eingesetzt werden. Durch eine geeignete Beschichtung des Ringspiegels kann der Spektralbereich zusätzlich erweitert bzw. auf den entsprechenden Einsatzfall angepasst werden.

Gegenüber der Verwendung eines Prismas als Umlenkelement hat die erfindungsgemäße Verwendung eines Ringspiegels den weiteren Vorteil, dass die Vorrichtung auch für Messungen mit Dunkelfeldbeleuchtung eingesetzt werden kann. Eine solche Dunkelfeldbeleuchtung erfordert einen sehr flachen Einstrahlungswinkel auf die Stoffprobe. Dies kann bei Einsatz eines Prismas als Umlenkelement nicht erreicht werden, da durch die starke Ablenkung und die Fokussierung/Bündelung der aus einem Lichtleiter zugeführten Strahlung so viel Streulicht an der Innenseite des Beobachtungsfensters entstände, dass die spektrale Auflösung zu stark eingeschränkt wäre. Im Unterschied hierzu lässt sich bei der erfindungsgemäßen Verwendung eines Ringspiegels als Umlenkelement das parasitäre Streulicht auf < 0,3% reduzieren, so dass Dunkelfeldmessungen mit hoher Auflösung möglich sind. Ein Ringspiegel gestattet weiterhin eine größere Gestaltungsfreiheit in Bezug auf die Form der einfallenden Strahlung. So kann der Ringspiegel strahlformende und insbesondere fokussierende Eigenschaften haben, so dass die aus dem Lichtleiter austretende Strahlung in einen ausgewählten räumlichen Bereich der Stoffprobe konzentriert werden kann.

In einer besonders vorteilhaften Ausgestaltung ist der Ringspiegel in mehrere Segmente unterteilt, die unterschiedliche Reflexionseigenschaften aufweisen. Dies ermöglicht eine wellenlängenselektive Reflexion der Strahlung sowie eine lokale Optimierung auf den jeweiligen Spektralbereich. Diese einzelnen Segmente können aus unterschiedlichen Materialien bestehen. Alternativ kann der Ringspiegel entlang seines Umfangs Bereiche unterschiedlicher Beschichtung aufweisen, die mit unterschiedlicher wellenlängenspezifischer Reflexion der Strahlung einhergehen.

Zur bildgebenden Erfassung der Stoffprobe enthält die erfindungsgemäße Vorrichtung einen bildgebenden Detektor, beispielsweise einen CCD-Chip, mit dem ein zweidimensionales Bild des Beobachtungsbereichs aufgenommen wird. Mit Hilfe eines solchen bildgebenden Verfahrens können beispielsweise Kristallisationsprozesse in der Stoffprobe prozessbegleitend beobachtet werden. Vorteilhafterweise wird dabei die von der Stoffprobe ausgehende Strahlung mit Hilfe eines Objektivs auf ein Bündel von Lichtleitfasern fokussiert, welches das Bild auf den Detektor weiterleitet. Dies ist insbesondere in heißen Messumgebungen zweckmäßig, die die Funktion einer elektronischen Kamera negativ beeinflussen.

Zur gleichzeitigen Durchführung einer spektralen Untersuchung der Stoffprobe wird die von der Stoffprobe reflektierte bzw. emittierten Strahlung über den Ringspiegel auf ein Spektrometer geleitet. Dies erfolgt vorteilhafterweise mit Hilfe eines im Gehäuse der Vorrichtung integrierten Lichtleiters.

Insbesondere können Lichtleiter zur Lenkung der Strahlung auf die Stoffprobe und Lichtleiter, mittels derer die von der Stoffprobe ausgehende Strahlung auf den ersten Detektor geleitet wird, derart auf einem gemeinsamen Kreissegment angeordnet sein, dass über den Ringspiegel sowohl Strahlung zur Beleuchtung der Stoffprobe auf diese gelenkt wird als auch von der Stoffprobe ausgehende Strahlung auf den ersten Detektor geleitet wird.

Weiterhin kann das Umlenkelement die Form zweier kollinear angeordneter Ringspiegel haben, welche dazu eingerichtet sind, eine Anregungsstrahlung auf einen Bereich im Innenraum der Stoffprobe zu fokussieren.

Der Ringspiegel und das Objektiv sind in einem Gehäuse aufgenommen, das zumindest bereichsweise gas- bzw. flüssigkeitsdicht verkapselt werden kann, um die darin enthaltenen optischen und elektronischen Komponenten vor einem Eindringen der zu untersuchenden Stoffeprobe zu schützen. Zur Ein- und Ausleitung von Strahlung ist das Gehäuse mit einem Beobachtungsfenster, vorzugsweise einem Fenster aus Saphir, versehen. Saphir ist bekannt für seine große spektrale Bandbreite und gestattet somit Messungen sowohl im ultravioletten als auch im sichtbaren und NIR/MIR Spektralbereich.

Um die im Gehäuse der Vorrichtung integrierten Lichtleiter lagegenau zu positionieren und zu fixieren, ist im Gehäuse der Vorrichtung vorteilhafterweise eine Lochscheibe integriert, in der dem Ringspiegel zugewandten Enden der Lichtleiter aufgenommen sind. Auf diese Weise können die Lichtleiter reproduzierbar und hochgenau gegenüber dem Ringspiegel ausgerichtet werden.

Die Vorrichtung kann beispielsweise zur Beobachtung von Kristallisationsprozessen (simultan als Spektrum und im zweidimensionalen Bild), zur Überwachung von Herstellungsprozessen in der Biotechnologie (Fermenter, Zellzucht, ...), in der Biopharma-Branche, in der Lebensmittelindustrie etc. zum Einsatz kommen.

Nachfolgend werden Ausführungsbeispiele und Varianten der Erfindung anhand der Zeichnung näher erläutert. Es zeigen
- Figur 1: eine schematische Außenansicht einer Vorrichtung zur Untersuchung von Stoffproben mit mehreren Lichtquellen und mehreren Detektoren;
- Figur 2: eine schematische Schnittansicht der Vorrichtung der Figur 1;
- Figur 3a, 3b: schematische Aufsichten auf zwei unterschiedliche Ausführungsformen von Lochscheiben gemäß Schnittlinie IIIa in Figur 2;
- Figur 3c: eine schematische Aufsicht auf eine Spiegelfläche mit unterschiedlich beschichteten Segmenten gemäß Schnittlinie IIIc in Figur 2;
- Figur 4: eine schematische Schnittansicht einer alternativen Ausgestaltung der Vorrichtung der Figur 1;
- Figur 5: eine schematische Schnittansicht des Bereichs II der Vorrichtung der Figur 1 in einer weiteren alternativen Ausgestaltung.

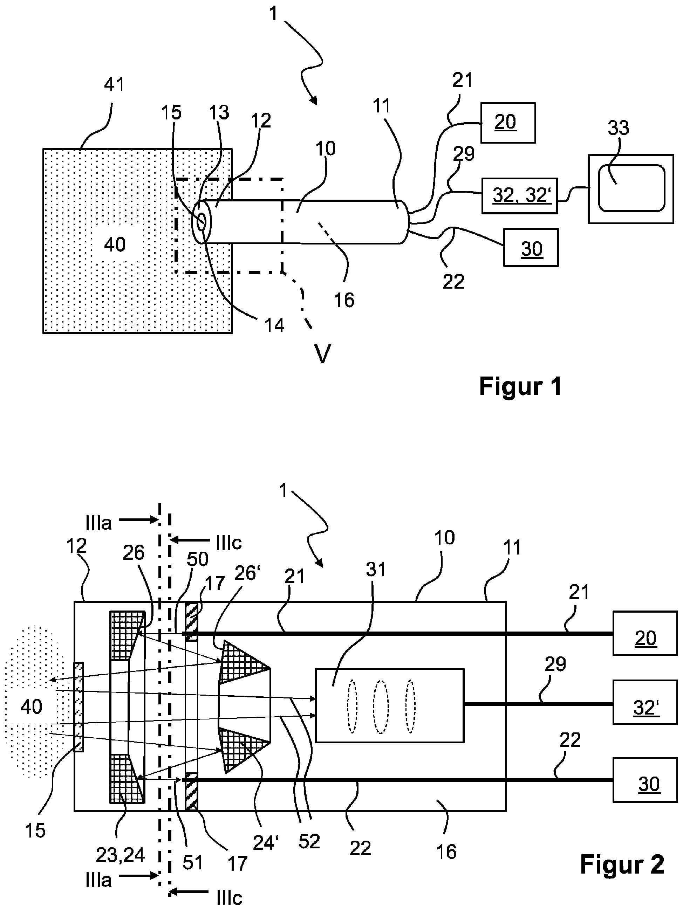

Figur 1 zeigt eine schematische Außenansicht einer Vorrichtung 1 zur Untersuchung einer Stoffprobe 40 mittels elektromagnetischer Strahlung. Die Vorrichtung 1 ist eine Immersionssonde, die sich insbesondere dazu eignet, prozessbegleitend Untersuchungen an gasförmigen und/oder flüssigen Stoffen 40 durchzuführen. Die Vorrichtung 1 ermöglicht dabei zwei Arten der Analyse, einerseits die Beobachtung der Stoffprobe 40 mittels eines bildgebenden Verfahrens und andererseits eine spektroskopische Untersuchung der Stoffprobe 40, wobei diese beiden Analysearten simultan und prozessbegleitend durchgeführt werden können. Hierzu umfasst die Vorrichtung eine Strahlungsquelle 20, einen Detektor 30 für spektrale Messungen (Spektrometer) sowie einen bildgebenden Detektor 32.

Die Vorrichtung 1 umfasst ein röhrenförmiges Gehäuse 10 mit einem ersten Ende 12, das in ein die Stoffprobe 40 enthaltendes Behältnis 41 eingeführt und dort verankert werden kann. Dieses Ende 12 ist mit einem Deckel 13 mit einer Aussparung 14 versehen, in die ein Fenster 15 eingelassen ist. Das Gehäuse 10 ist gas- bzw. flüssigkeitsdicht verkapselt, um ein Eindringen des zu untersuchenden Stoffes 40 in einen Innenraum 16 des Gehäuses 10 zu verhindern.

Zur Beleuchtung bzw. elektromagnetischen Anregung der Stoffprobe 40 umfasst die Vorrichtung 1 die (in Figur 1 schematisch angedeutete) Strahlungsquelle 20, die sich außerhalb des Gehäuses 10 befindet. Die Strahlung dieser Strahlungsquelle 20 wird mit Hilfe von einem oder mehreren Lichtleitern 21 von einem der Stoffprobe 40 abgewandten zweiten Ende 11 des Gehäuses 10 aus in den Innenraum 16 des Gehäuses 10 eingeleitet.

Zur Datenerfassung umfasst die Vorrichtung 1 den Detektor 32 zur Aufnahme von Bilddaten der Stoffprobe 40, insbesondere einen Kamerachip, der im vorliegenden Ausführungsbeispiel in eine Bildverarbeitungseinheit 32' integriert ist; die von der Stoffprobe 40 erfassten Bilddaten werden mit Hilfe eines Lichtleiter-Faserbündels 29 aus dem Innenraum 16 des Gehäuses 10 zum Detektor 32 geleitet. Die Bilddaten können prozessbegleitend auf einem Monitor 33 dargestellt werden. Weiterhin umfasst die Vorrichtung 1 den Detektor 30 zur spektralen Analyse der von der Stoffprobe 40 reflektierten bzw. emittierten Strahlung. Diese Strahlung wird mittels eines oder mehrerer Lichtleiter 22 aus dem Innenraum 16 des Gehäuses 10 zum Detektor 30 geleitet.

Figur 2 zeigt eine schematische Schnittansicht der Vorrichtung 1 der Figur 1. Der mit der Strahlungsquelle 20 verbundene Lichtleiter 21 ist im Innenraum 16 des Gehäuses 10 endseitig durch eine Aussparung einer Lochscheibe 17 geführt, an der das der Stoffprobe 40 zugewandte Ende des Lichtleiters 21 lagefixiert ist. Die aus dem Lichtleiter 21 austretende Strahlung 50 wird über ein Umlenkelement 23 durch das Gehäusefenster 15 hindurch auf die Stoffprobe 40 geleitet. Das Umlenkelement 23 hat dabei die Form zweier kollinear angeordneter Ringspiegel 24, 24', die die Anregungsstrahlung 50 auf einen Bereich im Innenraum der Stoffprobe 40 fokussieren.

Die von der Stoffprobe 40 reflektierte bzw. emittierte Strahlung 51 wird mit Hilfe der Ringspiegel 24,24' in den Lichtleiter 22 gelenkt, der die Strahlung 51 an das Spektrometer 30 weiterleitet. Das dem Eintrittsfenster 15 zugewandte Ende des Lichtleiters 22 ist - ebenso wie das Ende des Lichtleiters 21 - in der Lochscheibe 17 befestigt. Die Lochscheibe 17 hat die Form einer ringförmigen Scheibe, in der beide Lichtleiter 21, 22 lagegenau positioniert und fixiert sind.

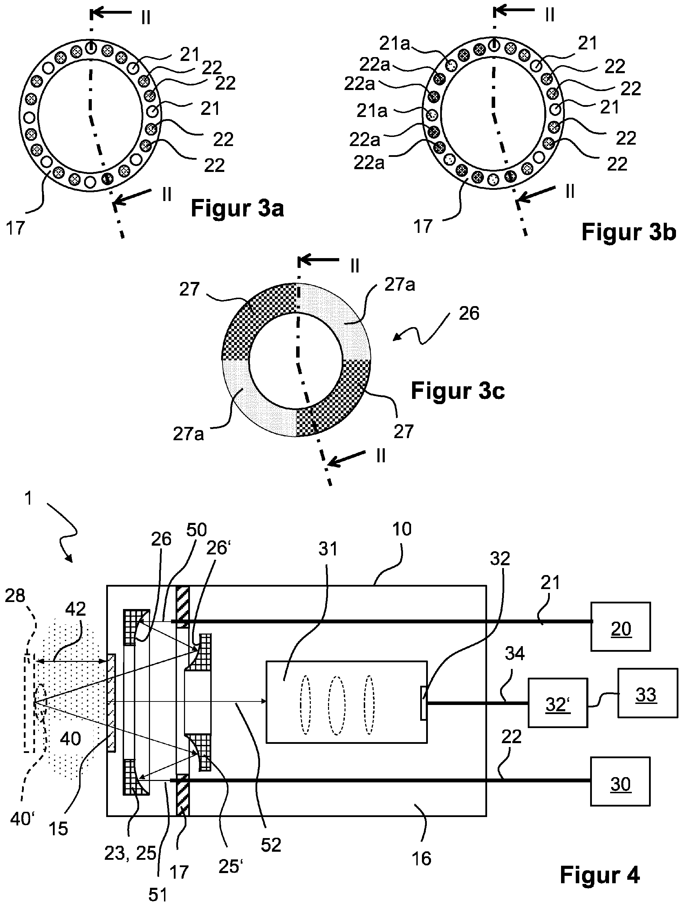

Figur 3a zeigt eine Aufsicht auf die Lochscheibe 17 gemäß der Schnittlinie IIIa in Figur 2. Wie in Figur 3a dargestellt, wird die Strahlung der Strahlungsquelle 20 nicht über einen einzigen, sondern über eine Mehrzahl von (in Figur 3a durch Kreise dargestellten) Lichtleitern 21 auf die Stoffprobe 40 geleitet, von denen in Figur 2 jedoch nur ein einziger dargestellt ist. Die Lichtleiter 21 sind über den Umfang der Lochscheibe 17 verteilt, was eine gleichmäßige Ausleuchtung des Beobachtungsbereichs der Stoffprobe 40 gewährleistet. Analog wird die von der Stoffprobe 40 ausgehende Messstrahlung 51 über eine Mehrzahl von Lichtleitern 22 (hier: schraffiert dargestellte Kreise) an das Spektrometer 30 geleitet. Durch Verwendung einer Mehrzahl von Lichtleitern 21, 22 kann eine höhere und gleichmäßigere Intensität der einfallenden und der dem Detektor 30 zugeleiteten reflektierten Strahlung erreicht werden.

Die beiden Ringspiegel 24, 24' umfassen reflektierende Oberflächen 26, 26', die - je nach Anwendungsfall - mit einer Beschichtung versehen sein können, die auf den bei der Messung verwendeten Spektralbereich hin optimiert ist. Sollen beispielsweise an der Stoffprobe 40 Messungen im UV- und im sichtbaren Spektralbereich durchgeführt werden, so empfiehlt sich eine (in diesem Spektralbereich verlustarme) Aluminium-Beschichtung; soll die Messung im nahen oder mittleren Infrarotbereich erfolgen, so empfiehlt sich eine (in diesem Spektralbereich verlustarme) Gold-Beschichtung.

Figur 3b zeigt eine Ausgestaltung einer Lochscheibe, die in einer solchen Weise mit Lichtleitern bestückt ist, dass Messungen sowohl im UV- als auch im IR-Bereich durchgeführt werden können. Die Vorrichtung 1 umfasst in diesem Fall einerseits Lichtleiter 21, die mit der (in Figur 1 und 2 gezeigten) UV-Strahlungsquelle verbunden sind und andererseits Lichtleiter 21a, die mit einer (in Figur 1 und 2 nicht dargestellten) IR-Strahlungsquelle verbunden sind. Weiterhin sind Lichtleiter 22 vorgesehen, die mit dem UV-Spektrometer 30 der Figur 1 und 2 verbunden sind sowie Lichtleiter 22a, die mit einem (in Figur 1 und 2 nicht dargestellten) IR-Spektrometer verbunden sind. Die Lichtleiter 21, 22 dienen somit zur Durchführung von UV-Spektroskopie, während die Lichtleiter 21a, 22a zur Durchführung von IR-Spektroskopie dienen. Wie aus Figur 3b ersichtlich, sind die zur UV-Spektroskopie verwendeten Lichtleiter 21, 22 auf dem einen Halbkreis der Lochscheibe 17 angeordnet, während die zur IR-Spektroskopie verwendeten Lichtleiter 21a, 22a auf dem gegenüberliegenden Halbkreis der Lochscheibe 17 angeordnet sind. Um in beiden Spektralbereichen simultan verlustarm Messungen durchführen zu können, sind in diesem Anwendungsfall auch die Spiegeloberflächen 26, 26' in mehrere Segmente 27, 27a aufgeteilt, die mit unterschiedlichen Beschichtungen versehen. Figur 3c zeigt eine Aufsicht auf den Ringspiegel 24 entlang der Schnittlinie IIIc in Figur 2. Im vorliegenden Fall sind einige Bereiche 27 mit einer Aluminium-Beschichtung versehen (und haben daher optimale Reflektionseigenschaften für UV-Strahlung), die anderen Bereiche 27b sind mit einer Gold-Beschichtung versehen (und haben daher optimale Reflektionseigenschaften für IR-Strahlung).

Zusätzlich zu den spektroskopischen Messungen ermöglicht die Vorrichtung 1 der Figuren 1 und 2 bildgebende Messungen der Stoffprobe 40. Hierzu ist im Innenraum 16 des Gehäuses 10 zentriert ein Objektiv 31 angeordnet mehrere (in Figur 2 schematisch dargestellte) Linsen umfasst. Durch das Objektiv wird Strahlung 52 der Stoffprobe 40 auf einem außerhalb des Gehäuses 10 angeordneten Kamerachip 32 in ein zweidimensionales Bild der Stoffprobe 40 abgebildet. Die Bilddaten werden mit Hilfe des Faserbündels 29 vom Objektiv 31 auf den Kamerachip 32 geleitet; eine solche Ausgliederung des Kamerachips 23 aus dem Gehäuse 10 ermöglicht den Einsatz der Vorrichtung 1 in einem Reaktionsumfeld mit erhöhten Temperaturen, bei denen ein in das Gehäuse 10 integrierter Kamerachip keine qualitativ hochwertigen Daten liefern könnte.

Figur 4 zeigt eine alternative Ausgestaltung der Vorrichtung 1, in der die Spiegelflächen 26, 26' der Ringspiegel 25, 25' in einer solchen Weise gekrümmt sind, dass sie eine fokussierende Wirkung haben. Die aus den Lichtleitern 21 austretende Strahlung 50 wird somit mittels der Ringspiegel 25, 25' auf einen ausgewählten Bereich 40' der Stoffprobe 40 fokussiert, und die von der Stoffprobe 40 reflektierte Strahlung 51 wird über die Ringspiegel 25, 25' in die Lichtleiter 22 eingekoppelt. Die Stirnflächen der Lichtleiter 21, 22 sind poliert. Eine solche Gestaltung der Vorrichtung 1 eignet sich beispielsweise zur Durchführung von Ramanspektroskopie oder Fluoreszenzmessungen. Sie ermöglicht aber auch Messungen in Transreflexion, bei denen eine von der Stoffprobe 40 transmittierte Strahlung mit Hilfe eines (in Figur gestrichelt angedeuteten) Spiegels 28 in die Lichtleiter 22 eingekoppelt und an das Spektrometer 30 weitergeleitet wird. Um qualitativ hochwertige Messergebnisse zu gewährleisten, sollte der Strahlengang hier bestmöglich kollimiert sein, und der Einfallswinkel der Strahlung sollte in einer solchen Weise gewählt werden, dass eine Variation der Schichtlänge 42 über einen Bereich von mehreren Millimetern ohne größere Intensitätsverluste möglich ist. Die Aperturen der Lichtleiter 21, 22 werden ggf. mit Hilfe optischer Elemente korrigiert, um Intensitätsverluste zu minimieren.

Im Ausführungsbeispiel der Figur 4 ist der Kamerachip 32 zur Aufnahme bildgebender Daten in das Gehäuse 10 der Vorrichtung 1 integriert und ist über ein Kabel 34 an die außerhalb des Gehäuses 10 befindliche Bildverarbeitungseinheit 32' verbunden, in dem die Bilddaten weiterverarbeitet und auf dem Monitor 33 dargestellt werden können.

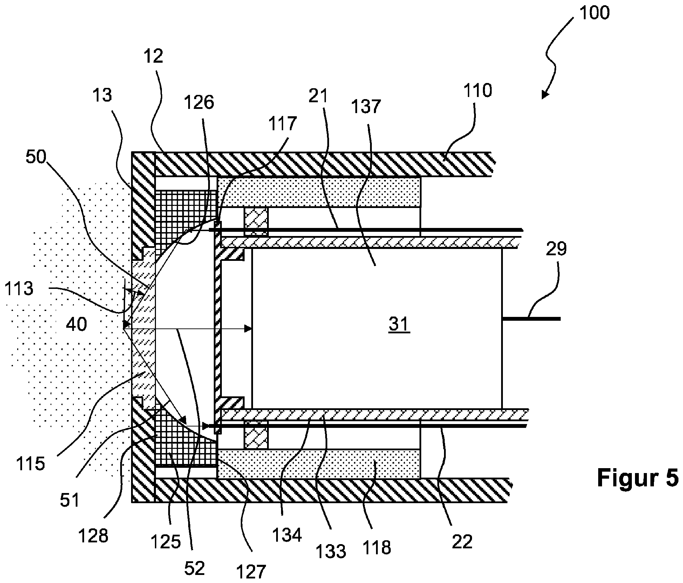

Figur 5 zeigt einen in Figur 1 mit V bezeichneten Ausschnitt der Vorrichtung 1 in einer Schnittdarstellung für einen Anwendungsfall, in dem neben der Erzeugung eines zweidimensionalen Bildes der Stoffprobe 40 spektroskopische Untersuchungen unter einem sehr flachen Einfallswinkel 113 der einfallenden Strahlung 50 durchgeführt werden sollen. Eine solche Anordnung eignet sich insbesondere zur Dunkelfeldbeleuchtung, aber auch zur Vermeidung an den Grenzflächen eines Beobachtungsfensters 115.

Im Unterschied zu den in Figuren 2 und 4 dargestellten Vorrichtungen ist hier ein einziger fokussierender Ringspiegel 125 vorgesehen, der die aus dem Lichtleiter 21 austretende Strahlung 50 auf die Stoffprobe 40 fokussiert und die von der Stoffprobe 40 reflektierte Strahlung 51 auf den zum Spektrometer führenden Lichtleiter 22 lenkt. Im Ausführungsbeispiel der Figur 5 ist dieser Ringspiegel 125 in einer solchen Weise im Gehäuse 10 angeordnet, dass seine Rückseite 128 ringförmig und flächig auf dem Beobachtungsfenster 115 aufliegt. Das Beobachtungsfenster 115 ist hier ein Stufenfenster aus Saphir. Ein ringförmig auf der Vorderseite 127 des Ringspiegels 125 aufliegendes Andruckrohr 118 drückt den Ringspiegel 125 gegen das Fenster 115. Mit Hilfe des Andruckrohrs 118 wird somit der Ringspiegel 125 gegen das Fenster 115 gepresst und gleichzeitig ein Umfangsbereich des Fensters 115 seitlich gegen den Gehäusedeckel 13 gedrückt, so dass Ringspiegel 125 und Beobachtungsfenster 115 gemeinsam gegenüber dem Gehäusedeckel 13 verspannt sind.

Die Lichtleiter 21, die das Licht der Strahlungsquelle 20 auf die Stoffprobe 40 führen, und die Lichtleiter 22, die das von der Stoffprobe 40 reflektierte Licht zum Spektrometer 30 leiten, sind ringförmig um ein mittig im Gehäuse 10 befestigtes Aufnahmerohr 133 angeordnet und endseitig an der Lochscheibe 117 befestigt, die - wie oben im Zusammenhang mit Figur 3a beschrieben - die Enden der einzelnen Lichtleiter 21, 22 positioniert, fixiert und ausrichtet. Die Lichtleiter 21, 22 sind im weiteren Verlauf an einer Außenwand 134 des Aufnahmerohrs 133 aufgeklebt. Die reflektierende Oberfläche 126 des Ringspiegels 125 ist vorzugsweise mit einer Beschichtung versehen, die dem Spektralbereich der Messstrahlung 50, 51 angepasst ist. Weiterhin kann - bei Messungen in mehreren Spektralbereichen - die Oberfläche 126 in mehrere Segmente aufgeteilt sein, die mit unterschiedlichen Beschichtungen versehen sind (siehe Figur 3c).

In einem Innenraum 137 des Aufnahmerohrs 133 ist das Objektiv 31 angeordnet, das Strahlung 52 der Stoffprobe 40 empfängt und ein zweidimensionales Bild der Stoffprobe 40 erzeugt. Um eine Justierung des Objektivs 31 zu ermöglichen, ist das Aufnahmerohr 133 verschiebbar im Andruckrohr 118 befestigt. Das durch das Objektiv 31 erzeugte Bild der Stoffprobe 40 wird über das Faserbündel 29 auf den außerhalb des Gehäuses 10 befindlichen, in die Bildverarbeitungseinheit 32' integrierten Kamerachip 32 geleitet, der mit dem in Figur 1 angedeuteten Monitor 33 verbunden ist.

### Bezugszeichenliste

- 1, 100: Vorrichtung
- 10, 110: Gehäuse
- 11: der Stoffprobe 40 abgewandtes zweites Ende des Gehäuses
- 12: der Stoffprobe 40 zugewandtes erstes Ende des Gehäuses
- 13: Deckel des Gehäuses
- 14: Aussparung im Deckel des Gehäuses
- 15: Fenster
- 16: Innenraum Gehäuse
- 17: Lochscheibe
- 20: Strahlungsquelle
- 21, 21a: Lichtleiter für einfallende Strahlung
- 22, 22a: Lichtleiter für Messstrahlung
- 23: Umlenkelement
- 24, 24': Ringspiegel flach
- 25, 25': Ringspiegel fokussierend
- 26, 26': Spiegelfläche Ringspiegel
- 27: Segmente der Spiegelfläche
- 28: Spiegel zur Reflexionsmessung
- 29: Lichtleiter-Faserbündel für bildgebendes Verfahren
- 30: Detektor für Spektrale Messung (Spektrometer)
- 31: Objektiv
- 32: Bildgebender Detektor (Kamerachip)
- 32': Bildverarbeitungseinheit
- 33: Monitor
- 34: Kabel von Kamera zu Bildverarbeitungseinheit
- 40: Stoffprobe
- 40': Bereich der Stoffprobe
- 41: Behältnis der Stoffprobe
- 42: Schichtlänge der Stoffprobe
- 50: In die Stoffprobe einfallende Strahlung
- 51: von der Stoffprobe ausgehende Strahlung an Spektrometer
- 52: von der Stoffprobe ausgehende Strahlung für Bilderfassung
- 113: Einfallswinkel der Strahlung
- 115: Stufenfenster aus Saphir
- 117: Lochscheibe
- 118: Andruckrohr
- 125: Ringspiegel fokussierend
- 126: Spiegelfläche
- 127: Vorderseite Ringspiegel
- 128: Rückseite Ringspiegel
- 133: Aufnahmerohr
- 134: Außenwand des Aufnahmerohrs
- 137: Innenraum Aufnahmerohr

## Patentansprüche

1. Vorrichtung zur Untersuchung von Stoffproben (40) mittels elektromagnetischer Strahlung mit mehreren simultan einsetzbaren Detektoren (30, 32), umfassend
- eine Strahlungsquelle (20) zur Erzeugung elektromagnetischer Strahlung (50);
- einen ersten Lichtleiter (21, 21') und ein Umlenkelement (23) zur Lenkung der Strahlung (50) auf die Stoffprobe (40);
- einen ersten Detektor (30) zur Erfassung einer von der Stoffprobe (40) ausgehenden ersten Strahlung (51);
- einen zweiten Detektor (32) zur Erfassung einer von der Stoffprobe (40) ausgehenden zweiten Strahlung (52),
wobei das Umlenkelement (23) einen Ringspiegel (24, 24', 25, 25', 125) umfasst,
**dadurch gekennzeichnet, dass** der erste Detektor (30) zur Durchführung einer spektralen Messung ausgestaltet ist,
wobei die Vorrichtung (1) mindestens einen zweiten Lichtleiter (22, 22a) umfasst, mittels dessen die von der Stoffprobe (40) ausgehende Strahlung (51) auf den ersten Detektor (30) geleitet wird, und der erste Lichtleiter (21,21'), zur Lenkung der Strahlung (50) auf die Stoffprobe (40) und der zweite Lichtleiter (22,22a), mittels dessen derer die von der Stoffprobe (40) ausgehende Strahlung (51) auf den ersten Detektor (30) geleitet wird, derart auf einem gemeinsamen Kreissegment angeordnet sind, dass über das Umlenkelement (23) sowohl Strahlung zur Beleuchtung der Stoffprobe (40
) von dem ersten Lichtleiter (21,21') auf diese gelenkt wird als auch von der Stoffprobe (40) ausgehende Strahlung (51) über den zweiten Lichtleiter (22,22a) auf den ersten Detektor (30) geleitet wird.

2. Vorrichtung nach Anspruch 1,
**dadurch gekennzeichnet, dass**
das Umlenkelement (23) die Form zweier kollinear angeordneter Ringspiegel (24, 24', 25, 25') hat, welche dazu eingerichtet sind, eine Anregungsstrahlung (50) auf einen Bereich im Innenraum der Stoffprobe (40) zu fokussieren.

3. Vorrichtung nach Anspruch 1 oder 2, **dadurch gekennzeichnet, dass** der zweite Detektor (32) zur Durchführung einer bildgebenden Messung an der Stoffprobe (40) ausgestaltet ist.

4. Vorrichtung nach Anspruch 3,
**dadurch gekennzeichnet, dass**
die Vorrichtung (1) ein Objektiv (31) zur Erzeugung eines zweidimensionalen Bildes der Stoffprobe (40) im zweiten Detektor (32) umfasst.

5. Vorrichtung nach Anspruch 4,
**dadurch gekennzeichnet, dass**
die Vorrichtung (1) ein Lichtleiter-Faserbündel (29) umfasst, mittels dessen aus dem Objektiv (31) austretende Strahlung (52) auf den zweiten Detektor (32) geleitet wird.

6. Vorrichtung nach einem der vorangehenden Ansprüche,
**dadurch gekennzeichnet, dass**
der Ringspiegel (25, 25', 125) strahlformende Eigenschaften hat.

7. Vorrichtung nach Anspruch 6, **dadurch gekennzeichnet, dass** der Ringspiegel (25, 25', 125) eine Fokussierung der Strahlung (50, 51) bewirkt.

8. Vorrichtung nach einem der vorangehenden Ansprüche,
**dadurch gekennzeichnet, dass**
eine Spiegelfläche (26, 26', 126) des Ringspiegels (24, 24', 25, 25', 125) mit einer Beschichtung versehen ist.

9. Vorrichtung nach einem der vorangehenden Ansprüche,
**dadurch gekennzeichnet, dass**
der Ringspiegel (24, 24', 25, 25', 125) mehrere Segmente (27, 27a) umfasst, die unterschiedlichen Reflexionseigenschaften aufweisen.

10. Vorrichtung nach Anspruch 9,
**dadurch gekennzeichnet, dass**
die mehreren Segmente (27, 27a) durch lokal unterschiedliche Beschichtungen des Ringspiegels (24, 24', 25, 25', 125) gebildet sind.

11. Vorrichtung nach einem der vorangehenden Ansprüche,
**dadurch gekennzeichnet, dass**
die Vorrichtung (1) ein Gehäuse (10) zur Aufnahme des Umlenkelements (23, 24, 24', 25, 25', 125) und des Objektiv (31) umfasst.

12. Vorrichtung nach Anspruch 11,
**dadurch gekennzeichnet, dass**
in dem Gehäuse (10) ein Beobachtungsfenster (15, 115) aus Saphir vorgesehen ist.

13. Vorrichtung nach Anspruch 11 oder 12,
**dadurch gekennzeichnet, dass**
die Vorrichtung (1) mindestens eine Lochscheibe (17, 117) umfasst, mittels derer die Lichtleiter (21, 21a, 22, 22a) im Gehäuse (10) lagefixierbar sind.

## Claims

1. Apparatus for examining material samples (40) by means of electromagnetic radiation, comprising a plurality of detectors (30, 32) that can be used simultaneously, comprising
- a radiation source (20) for generating electromagnetic radiation (50);
- a first light guide (21, 21') and a deflection element (23) for directing the radiation (50) onto the material sample (40);
- a first detector (30) for detecting first radiation (51) emanating from the material sample (40);
- a second detector (32) for detecting second radiation (52) emanating from the material sample (40),
wherein the deflection element (23) comprises an annular mirror (24, 24', 25, 25', 125),
**characterised in that** the first detector (30) is configured to perform a spectral measurement,
wherein the apparatus (1) comprises at least one second light guide (22, 22a), by means of which the radiation (51) emanating from the material sample (40) is guided to the first detector (30), and wherein the first light guide (21, 21'), for directing the radiation (50) onto the material sample (40), and the second light guide (22, 22a), by means of which the radiation (51) emanating from the material sample (40) is guided to the first detector (30), are arranged on a common circular segment in such a way that, by means of the deflection element (23), radiation for illuminating the material sample (40) is directed onto the material sample (40) from the first light guide (21, 21'), and radiation (51) emanating from the material sample (40) is also guided to the first detector (30) via the second light guide (22, 22a).

2. Apparatus according to claim 1,
**characterised in that**
the deflection element (23) has the form of two collinearly arranged annular mirrors (24, 24', 25, 25'), which are configured to focus excitation radiation (50) onto a region in the interior of the material sample (40).

3. Apparatus according to claim 1 or 2, **characterised in that** the second detector (32) is configured to perform an imaging measurement on the material sample (40).

4. Apparatus according to claim 3,
**characterised in that**
the apparatus (1) comprises an objective lens (31) for generating a two-dimensional image of the material sample (40) on the second detector (32).

5. Apparatus according to claim 4,
**characterised in that**
the apparatus (1) comprises a fibre-optic bundle (29), by means of which radiation (52) emerging from the objective lens (31) is guided to the second detector (32).

6. Apparatus according to any one of the preceding claims,
**characterised in that**
the annular mirror (25, 25', 125) has beam-shaping properties.

7. Apparatus according to claim 6, **characterised in that** the annular mirror (25, 25', 125) causes the radiation (50, 51) to be focused.

8. Apparatus according to any one of the preceding claims,
**characterised in that**
a mirror surface (26, 26', 126) of the annular mirror (24, 24', 25, 25', 125) is provided with a coating.

9. Apparatus according to any one of the preceding claims,
**characterised in that**
the annular mirror (24, 24', 25, 25', 125) comprises a plurality of segments (27, 27a) having different reflection properties.

10. Apparatus according to claim 9,
**characterised in that**
the plurality of segments (27, 27a) are formed by locally different coatings of the annular mirror (24, 24', 25, 25', 125).

11. Apparatus according to any one of the preceding claims,
**characterised in that**
the apparatus (1) comprises a housing (10) for accommodating the deflection element (23, 24, 24', 25, 25', 125) and the objective lens (31).

12. Apparatus according to claim 11,
**characterised in that**
an observation window (15, 115) made of sapphire is provided in the housing (10).

13. Apparatus according to claim 11 or 12,
**characterised in that**
the apparatus (1) comprises at least one perforated disc (17, 117), by means of which the light guides (21, 21a, 22, 22a) can be fixed in position in the housing (10).

## Revendications

1. Dispositif destiné à l'examen d'échantillons de matière (40) au moyen d'un rayonnement électromagnétique, comportant plusieurs détecteurs (30, 32) pouvant être utilisés simultanément, comprenant
- une source de rayonnement (20) destinée à générer un rayonnement électromagnétique (50);
- un premier guide de lumière (21, 21') et un élément de déviation (23) destinés à diriger le rayonnement (50) vers l'échantillon de matière (40) ;
- un premier détecteur (30) destiné à détecter un premier rayonnement (51) émis par l'échantillon de matière (40) ;
- un deuxième détecteur (32) destiné à détecter un deuxième rayonnement (52) émis par l'échantillon de matière (40),
l'élément de déviation (23) comprenant un miroir annulaire (24, 24', 25, 25', 125),
**caractérisé en ce que** le premier détecteur (30) est conçu pour effectuer une mesure spectrale,
le dispositif (1) comprenant au moins un deuxième guide de lumière (22, 22a), au moyen duquel le rayonnement (51) émis par l'échantillon de matière (40) est acheminé vers le premier détecteur (30), et le premier guide de lumière (21, 21'), destiné à diriger le rayonnement (50) vers l'échantillon de matière (40), et le deuxième guide de lumière (22, 22a), au moyen duquel le rayonnement (51) émis par l'échantillon de matière (40) est acheminé vers le premier détecteur (30), étant disposés sur un segment de cercle commun de telle sorte que, par l'intermédiaire de l'élément de déviation (23), un rayonnement destiné à éclairer l'échantillon de matière (40) est dirigé vers celui-ci depuis le premier guide de lumière (21, 21'), et qu'un rayonnement (51) émis par l'-échantillon de matière (40) est également acheminé vers le premier détecteur (30) par l'intermédiaire du deuxième guide de lumière (22, 22a).

2. Dispositif selon la revendication 1,
**caractérisé en ce que**
l'élément de déviation (23) présente la forme de deux miroirs annulaires (24, 24', 25, 25') disposés de manière colinéaire, lesquels sont configurés pour focaliser un rayonnement d'excitation (50) sur une zone située à l'intérieur de l'-échantillon de matière (40).

3. Dispositif selon la revendication 1 ou 2, **caractérisé en ce que** le deuxième détecteur (32) est conçu pour effectuer une mesure par imagerie de l'échantillon de matière (40).

4. Dispositif selon la revendication 3,
**caractérisé en ce que**
le dispositif (1) comprend un objectif (31) destiné à produire une image bidimensionnelle de l'échantillon de matière (40) sur le deuxième détecteur (32).

5. Dispositif selon la revendication 4,
**caractérisé en ce que**
le dispositif (1) comprend un faisceau de fibres optiques (29), au moyen duquel le rayonnement (52) sortant de l'objectif (31) est acheminé vers le deuxième détecteur (32).

6. Dispositif selon l'une quelconque des revendications précédentes,
**caractérisé en ce que**
le miroir annulaire (25, 25', 125) présente des propriétés de mise en forme du faisceau.

7. Dispositif selon la revendication 6,
**caractérisé en ce que**
le miroir annulaire (25, 25', 125) provoque une focalisation du rayonnement (50, 51).

8. Dispositif selon l'une quelconque des revendications précédentes,
**caractérisé en ce que**
une surface réfléchissante (26, 26', 126) du miroir annulaire (24, 24', 25, 25', 125) est pourvue d'un revêtement.

9. Dispositif selon l'une quelconque des revendications précédentes,
**caractérisé en ce que**
le miroir annulaire (24, 24', 25, 25', 125) comprend plusieurs segments (27, 27a) présentant des propriétés de réflexion différentes.

10. Dispositif selon la revendication 9,
**caractérisé en ce que**
les plusieurs segments (27, 27a) sont formés par des revêtements localement différents du miroir annulaire (24, 24', 25, 25', 125).

11. Dispositif selon l'une quelconque des revendications précédentes,
**caractérisé en ce que**
le dispositif (1) comprend un boîtier (10) destiné à recevoir l'élément de déviation (23, 24, 24', 25, 25', 125) et l'objectif (31).

12. Dispositif selon la revendication 11,
**caractérisé en ce que**
une fenêtre d'observation (15, 115) en saphir est prévue dans le boîtier (10).

13. Dispositif selon la revendication 11 ou 12,
**caractérisé en ce que**
le dispositif (1) comprend au moins un disque perforé (17, 117), au moyen duquel les guides de lumière (21, 21a, 22, 22a) peuvent être fixés en position dans le boîtier (10).
